# EUROPÄISCHE PATENTSCHRIFT

(11) **EP 1 839 479 B1**
(45) Veröffentlichungstag und Bekanntmachung des Hinweises auf die Patenterteilung: **24.03.2010**
(21) Anmeldenummer: 07100494.9
(22) Anmeldetag: 12.01.2007
(51) Int. Cl.: A01D 41/127, A01B 69/00, G05D 1/02

(54) **Verfahren zur Steuerung von landwirtschaftlichen Maschinensystemen**
Method for operating agricultural machinery
Procédé destiné à la commande de systèmes de machines agricoles

(30) Priorität: 30.03.2006 DE 102006015203
(43) Veröffentlichungstag der Anmeldung: 03.10.2007
(73) Patentinhaber: CLAAS Selbstfahrende Erntemaschinen GmbH, 33428 Harsewinkel (DE)
(72) Erfinder: Diekhans, Dr. Norbert, 33335, Gütersloh (DE); Huster, Jochen, 33330, Gütersloh (DE); Brunnert, Andreas, 33397, Rietberg (DE); Meyer zu Helligen, Lars Peter, 32139, Spenge (DE)
(74) Vertreter: Ellerbrächter, Dirk

(56) Entgegenhaltungen:
- EP-A2- 1 219 153
- EP-B1- 0 821 296
- WO-A-00/10063
- WO-A-03/019430
- DE-A1- 10 031 067
- US-A- 5 546 093

## Beschreibung

Die Erfindung betrifft ein Verfahren zur Steuerung mehrerer landwirtschaftlicher Maschinensysteme bei der Bearbeitung eines zu bearbeitenden Territonums, bei dem auf Basis einer Referenzlinie eine optimierte Route zur Bearbeitung des Territoriums für das jeweilige Maschinensystem ermittelt wird und dann das betreffende Maschinensystem entlang dieser Route gefahren wird. Darüber hinaus betrifft die Erfindung ein entsprechendes Steuerungssystem zur Steuerung einer Mehrzahl von landwirtschaftlichen Maschinensystemen.

Nachdem die Leistungsfähigkeit landwirtschaftlicher Maschinensysteme, d h. von Arbeitsfahrzeugen wie z. B. Mähdreschern oder Feldhäckslern bzw. von Schleppern mit diversen Anbauten wie Sämaschinen, Düngerstreuern, Spritzgeräten, Wendern, Schwadern etc. immer weiter gesteigert wurde, gewinnt in den letzten Jahren die Planung des Arbeitsablaufs immer mehr an Bedeutung. Für die einzelnen Arbeitseinsätze steht, insbesondere bei der Ernte, meist wetterbedingt nur ein begrenzter Arbeitszeitraum zur Verfugung, der oftmals wegen einer mangelnden Einsatzplanung nicht optimal ausgenutzt wird. Darüber hinaus ist eine präzise Einsatzplanung wichtig, um die theoretisch maximal mögliche Leistungsfähigkeit der Maschinen auch im praktischen Einsatz zu erreichen. Um dieses Ziel einer optimalen Durchführung des Arbeitseinsatzes zu erreichen, wurden sog Routenplanungssysteme und Routenplanungsverfahren entwickelt, mit denen für das jeweilige Maschinensystem eine optimale Route bei der Bearbeitung eines Territoriums, z B. eines bestimmten Schlages, ermittelt wird. Das betreffende Maschinensystem kann dann je nach Ausgestaltung des Maschinensystems vollautomatisch, d. h durch eine Lenkautomation, halbautomatisch oder manuell mit Unterstützung durch eine geeignete Anzeigevorrichtung, bei der der Benutzer versuchen muss, das Fahrzeug auf einer virtuellen Fahrlinie zu halten, entlang dieser Route verfahren werden. Üblicherweise arbeiten solche Routenplanungssysteme und die Lenkautomaten mit satellitengestützten Navigationseinrichtungen, beispielsweise mit Hilfe von GPS-Empfängern (GPS = Global Positioning System). Zur Verbesserung der Genauigkeit gibt es verschiedene Korrekturverfahren, wie beispielsweise für das GPS-Verfahren das sog. DGPS (Differentielles GPS)

Ein Routenplanungssystem wird beispielsweise in der EP 0 821 296 A2 beschrieben. Hierbei werden durch Abfahren oder Ablaufen der Feldumrandung mit einem GPS-Gerät die Koordinaten für die Feldumrandung aufgezeichnet und es werden weitere arbeitsfahrzeugspezifische Daten, insbesondere die Arbeitsbreite, eingegeben. Mit einer elektronischen Datenverarbeitungseinrichtung wird dann anhand eines bestimmten Berechnungsalgorithmus der Verlauf des Bearbeitungsfahrwegs in Form einer digitalisierten Bearbeitungsroute generiert, wobei ein bestimmtes Optimierungskriterium für die Bearbeitungsroute beachtet wird Typische Optimierungskriterien können beispielsweise darin bestehen, dass notwendige Hilfsfahrten wie beispielsweise Fahrtstrecken zum Wenden an den Feldenden, Fahrten zum Abtanken eines Mähdreschers etc. möglichst gering gehalten werden. Ein anderes Optimierungskriterium kann darin bestehen, dass die Zeit zur Bearbeitung eines bestimmten Feldes Insgesamt möglichst gering zu halten ist, wobei ggf. etwas längere Wendestrecken, die aber schneller abfahrbar sind, weil sie keinen Fahrtrichtungswechsel erfordern, in Kauf genommen werden. Ebenso kann aber auch eine Optimierung hinsichtlich mehrerer verschiedener Optimierungskriterien erfolgen, um einen optimalen Kompromiss zwischen den verschiedenen Optimierungskriterien zu erreichen.

In vielen Fallen werden landwirtschaftliche Nutzflachen von Maschinensystemen mit unterschiedlicher Arbeitsbreite bearbeitet. Sofern es sich um neuere Maschinensysteme handelt, haben diese oft ein eigenes separates GPSgestütztes Routenplanungs- und Automationssystem, welches - basierend auf den Abmessungen und sonstigen Rahmenbedingungen des jeweiligen Maschinensystems - eine auf das betreffende Maschinensystem abgestimmte Routenplanung durchführt. Dies erfordert, dass jedes Maschinensystem zunächst wenigstens die Außenkontur des zu bearbeitenden Territoriums, beispielsweise durch einmaliges Umfahren, bestimmt. Ein solches Vorgehen ist relativ zeitaufwändig. Zwar besteht bereits die Möglichkeit, wie dies in der EP 0 821 296 B1 und der DE 10 2004 027 242 beschrieben wird, dass von einem Routenplanungssystem bereits komplett erstellte Fahrtrouten für andere Einsatzzwecke wieder genutzt werden. Dies ist jedoch nur dann möglich, wenn es sich um das gleiche Maschinensystem handelt oder zumindest um ein Maschinensystem mit gleichen oder sehr ähnlichen Arbeitsparametern wie Arbeitsbreite, Wendekreis etc.

Es ist daher eine Aufgabe der vorliegenden Erfindung, ein zeitsparenderes und damit kostengunstigeres Verfahren zur Steuerung mehrerer landwirtschaftlicher Maschinensysteme, welche insbesondere auch unterschiedliche Maschinenparameter aufweisen, sowie ein entsprechendes Steuerungssystem hierfür zu schaffen.

Diese Aufgabe wird zum einen durch ein Verfahren gemäß Patentanspruch 1 und zum anderen durch ein Steuerungssystem gemäß Patentanspruch 10 gelöst.

Bei dem erfindungsgemäßen Verfahren wird zunächst eine Referenzlinie durch Aufzeichnen einer mit einem ersten Maschinensystem abgefahrenen Referenzstrecke ermittelt. Diese Referenzlinie wird vom ersten Maschinensystem an zumindest ein zweites Maschinensystem übersendet, welches auf Basis dieser Referenzlinie des ersten Maschinensystems und unter Berücksichtigung der Arbeitsbedingungen des zweiten Maschinensystems entsprechend gesteuert wird. Bei den Arbeitsbedingungen kann es sich um Maschinenparameter wie Arbeitsbreite, Wenderadius etc. des Maschinensystems selbst, aber auch um Randbedingungen wie Feldfruchteigenschaften und deren Auswirkungen für das Maschinensystem etc handeln. Das heißt, es wird für das zweite Maschinensystem auf Basis der Referenzlinie eine eigene, speziell auf dieses Maschinensystem zugeschnittene Route ermittelt.

Ein erfindungsgemäßes Steuerungssystem zur Steuerung einer Mehrzahl von landwirtschaftlichen Maschinensystemen bei der Bearbeitung eines zu bearbeitenden Territoriums muss eine an einem ersten Maschinensystem angeordnete Referenzlinienermittlungseinrichtung aufweisen, um durch Aufzeichnen einer mit dem ersten Maschinensystem abgefahrenen Referenzstrecke eine Referenzlinie zu ermitteln. Außerdem wird am ersten Maschinensystem eine Sendeeinrichtung benötigt, um die Referenzlinie an zumindest ein zweites Maschinensystem zu ubersenden. Ein zweites Maschinensystem muss eine entsprechende Empfangseinrichtung aufweisen, um die Referenzlinie des ersten Maschinensystems zu empfangen. Außerdem wird eine Routenplanungseinrichtung für das zweite Maschinensystem benötigt, um auf Basis der empfangenen Referenzlinie und unter Berücksichtigung der Arbeitsbedingungen des zweiten Maschinensystems eine optimierte Route zur Bearbeitung des Territoriums für das zweite Maschinensystem zu ermitteln.

Am zweiten Maschinensystem ist dabei bevorzugt auch eine Fahrsteuerungseinheit und/oder eine Anzeigeeinheit zum Verfahren des zweiten Maschinensystems entlang dieser Route angeordnet.

Mit dem erfindungsgemäßen Steuerungsverfahren bzw. Steuerungssystem ist es folglich nicht mehr nötig, dass jedes Maschinensystem selbst eine Referenzstrecke, beispielsweise die Feldumrandung, abfährt. Dennoch kann von jedem Maschinensystem individuell die für das jeweilige Maschinensystem optimale Route ermittelt und abgefahren werden,

Vorzugsweise kann dabei auf Basis dieser Referenzlinie auch das erste Maschinensystem selbst, welches die Referenzlinie aufgezeichnet hat, unter Berucksichtigung der Arbeitsbedingungen des ersten Maschinensystems gesteuert werden. Hierzu wird eine Routenplanungseinrichtung für das erste Maschinensystem benötigt, um auf Basis der Referenzlinie und unter Berücksichtigung der Arbeitsbedingungen des ersten Maschinensystems eine optimierte Route zur Bearbeitung des Territoriums für das erste Maschinensystem zu ermitteln. Außerdem sollten dann am ersten Maschinensystem eine Fahrsteuerungseinheit und/oder eine Anzeigeeinheit zum Verfahren des Maschinensystems entlang dieser Route angeordnet sein.

Die abhängigen Ansprüche und die weitere Beschreibung enthalten besonders vorteilhafte Ausgestaltungen und Weiterbildungen der Erfindung, wobei das erfindungsgemäße Steuerungssystem auch analog zu den abhängigen Verfahrensansprüchen weitergebildet sein kann und umgekehrt.

In vielen Fällen reicht es aus, wenn nur eine Referenzlinie übertragen wird, beispielsweise nur ein Schlagrand, zu dem die einzelnen Spuren parallel verlaufen, entlang deren das jeweilige Maschinensystem zur Bearbeitung des Schlages verfahren werden soll. Vorzugsweise werden aber mehrere Referenzlinien vom ersten Maschinensystem ermittelt und an das zweite Maschinensystem gesendet, beispielsweise der obere Schlagrand, der untere Schlagrand, der rechte und der linke Schlagrand sowie im Schlag an passenden Positionen verlaufende Strecken, an denen beispielsweise der Schlag in geeigneter Weise in Teilgebiete unterteilt werden kann.

Für das Aufzeichnen der Referenzlinie gibt es verschiedene Möglichkeiten. Beispielsweise kann bei einer Variante der Fahrer beim Abfahren einer Referenzstrecke an einer Bedienerschnittstelle zunächst einen Startpunkt setzen und ebenso wieder einen Endpunkt setzen, wenn er das Ende der Referenzstrecke erreicht hat. Dabei ist es möglich, dass als Referenzstrecke immer eine gerade Linie zwischen Start- und Endpunkt gezogen wird. Dies bietet sich beispielsweise an, wenn es sich um eine entsprechend gerade Schlagkante oder um eine Linie im Schlag handelt, entlang deren der Schlag in Teilgebiete unterteilt werden soll. Ebenso ist aber auch ein "Konturmodus" realisierbar, bei dem zwischen dem Startpunkt und dem Endpunkt der Referenzstrecke regelmäßig die Positionskoordinaten des Fahrzeugs erfasst und aufgezeichnet werden und somit die genaue Kontur der abgefahrenen Referenzstrecke erfasst wird und als Referenzlinie verwendet werden kann. Eine weitere Alternative besteht dann, dass nur ein Startpunkt vorgegeben und dann eine bestimmte Streckenlänge abgefahren wird.

Bei einer Referenzlinie kann es sich, wie zuvor beschrieben, um eine einzelne Strecke, beispielsweise nur um einen Schlagrand handeln. Eine Referenzlinie kann aber auch aus mehreren Teilstrecken zusammengesetzt sein, wobei die einzelnen Teilstrecken natürlich auch wieder als separate Referenzlinien angesehen werden können

Zur Verwendung auf dem zweiten Maschinensystem kann diese Referenzlinie grundsätzlich in ein anderes Koordinatensystem umgerechnet werden. Bei einer bevorzugten Variante arbeiten jedoch beide Maschinensysteme mit demselben Koordinatensystem, d, h. sowohl die Ermittlung der Referenzlinie als auch die Ermittlung der optimierten Routen für das erste Maschinensystem und das zweite Maschinensystem erfolgen jeweils im gleichen Koordinatensystem mit einem genau definierten Ursprung. Es wird dabei vorzugsweise ein lokales Koordinatensystem verwendet, dessen Ursprung - beispielsweise eine Ecke des zu bearbeitenden Territoriums - in Form von Koordinaten des satellitenunterstützten Navigationssystems definiert ist, z. B. als GPS-Position mit Breitengrad, Längengrad und Elevation, Dieser "Nullpunkt" ist dann für alle Maschinensysteme identisch.

Es ist grundsätzlich möglich, dass das erste Maschinensystem und das zweite Maschinensystem das Territorium zeitlich nacheinander bearbeiten, d. h. dass es sich um Maschinensysteme einer Verfahrenskette handelt, wie z. B. eine Samaschine und eine Feldspritze oder eine Schneidemaschine und nachfolgende Wender und Schwader.

Ein typischer Anwendungsfall der Erfindung besteht beispielsweise darin, dass auf einem bisher unbearbeiteten Schlag im Frühjahr eine Egge mit einer bestimmten ersten Arbeitsbreite eingesetzt wird Dabei wird mit dem betreffenden Maschinensystem (Traktor mit Egge) eine Referenzlinie aufgezeichnet und basierend auf dieser Referenzlinie unter Berücksichtigung der Arbeitsbreite der Egge eine optimale Route für die Egge ermittelt Es folgt dann etwas später eine Einsaat mit einer Sämaschine, welche eine andere Arbeitsbreite aufweist. Diese erhält von der Egge die Referenzlinie und es wird dann, ebenfalls basierend auf dieser Referenzlinie, jedoch nun unter Berücksichtigung der Arbeitsbreite der Sämaschine, eine optimale Route für die Sämaschine ermittelt. Ebenso kann für nachfolgende Einsätze mit anderen Maschinensystemen, beispielsweise beim Ausbringen von Dünger oder Spritzmittel, verfahren werden, wobei die genutzten Maschinensysteme jeweils wieder andere Arbeitsbreiten aufweisen. Diese Vorgehensweise kann beliebig fortgesetzt werden, d, h es kann z. B die gleiche Referenzlinie schließlich auch von einem Mähdrescher bei der Ernte genutzt werden, um für diesen die optimale Route unter Berücksichtigung der Arbeitsbreite des Mähdreschers zu ermitteln.

Vorzugsweise wird das Verfahren jedoch auch dann genutzt, wenn das erste Maschinensystem und das zweite Maschinensystem ein Territorium zumindest zeitweise parallel bearbeiten, wie z. B. für die Maschinen eines Maschinenverbands, welche parallel ein größeres Gebiet abarbeiten. Dabei können die einzelnen Maschinensysteme auch gleichartige Maschinensysteme, beispielsweise mehrere Mähdrescher oder mehrere Feldhäcksler - auch desselben Typs - sein.

Bei einem bevorzugten Ausführungsbeispiel wird auf Basis einer ursprünglich ermittelten Referenzlinie eine weitere, abgeleitete Referenzlinie ermittelt, welche anstelle oder zusammen mit der ursprünglich ermittelten Referenzlinie an das zweite Maschinensystem übergeben wird Das heißt, es werden beispielsweise aus der ursprünglich aufgenommenen Referenzlinie eine oder mehrere verschobene Referenzlinien als virtuelle Leitlinien erzeugt, welche die Fahrspuren für die einzelnen Maschinensysteme definieren. Dabei ist vorzugsweise ein fester Versatz zwischen den weiteren Referenzlinien vorgesehen. Dies ist insbesondere dann sinnvoll, wenn es sich um gleichartige Maschinensysteme handelt, die parallel ein- und dasselbe Feld bearbeiten.

Zusätzlich zu den Referenzlinien können vorzugsweise auch Zusatzinformationen wie Wegmarkierungen, bereits bearbeitete Fahrspuren, Hindernisse.

Sperrflächen etc. vom ersten Maschinensystem an das zweite Maschinensystem ubergeben werden. Diese können dann bei der Steuerung des zweiten Maschinensystems, d. h der Routenplanung für dieses Maschinensystem, entsprechend berücksichtigt werden.

Vor allem wenn mehrere Maschinen gleichzeitig oder nur teilweise zeitlich versetzt ein Territorium gemeinsam bearbeiten, sollte die Übergabe aller Informationen, insbesondere der Referenzlinien, dynamisch während des gesamten Arbeitseinsatzes erfolgen. D. h sobald ein erstes Maschinensystem eine neue Referenzlinie ermittelt, wird diese sofort an das zweite Maschinensystem übersendet Dabei kann eine Übersendung automatisch durch das Maschinensystem erfolgen und/oder durch den Bediener des jeweiligen Maschinensystems veranlasst werden. Ebenso ist es aber auch möglich, eine Übersendung bzw. einen Empfang neuer Referenzlinien zu unterbinden bzw. zu verzögern.

Bevorzugt weist auch das zweite Maschinensystem eine geeignete Referenzlinienermittlungseinrichtung auf, um durch Aufzeichnen einer mit dem zweiten Maschinensystem abgefahrenen Referenzstrecke eine Referenzlinie zu ermitteln. Dieses Maschinensystem sollte dann bevorzugt auch eine Sendeeinrichtung aufweisen, um die Referenzlinie an zumindest ein weiteres Maschinensystem zu übersenden. Ebenso weist das erste Maschinensystem vorzugsweise auch eine Empfangseinrichtung auf, um die Referenzlinie eines anderen Maschinensystems zu empfangen. Auf diese Weise können die Maschinensysteme insbesondere beim Start eines Ernteeinsatzes auch jeweils einen Teil einer kombinierten Gesamt-Referenzlinie abfahren und sich gegenseitig die Referenzlinien übersenden. Beispielsweise konnte ein Maschinensystem den rechten und den oberen Schlagrand abfahren und das andere Maschinensystem den linken und den unteren Schlagrand, um so in kürzester Zeit alle notwendigen Referenzlinien bzw. Teilstrecken für eine kombinierten Gesamt-Referenzlinie (z.B. eine komplette Feldumrandung) zu ermitteln, die dann von dem Maschinensystem jeweils für die Routenplanung herangezogen wird.

Bei einer bevorzugten Variante ist es auch möglich, festzulegen, ob eine bestimmte Arbeitsmaschine Referenzlinien für andere Arbeitsmaschinen vorgeben darf und somit als eine Art "Master-Maschine" arbeitet oder ob es sich lediglich um eine "Client-Maschine" handelt, die nur von einer anderen Maschine Referenzlinien empfangt und entsprechend diesen Referenzlinien gesteuert wird.

Für die Kommunikation unter den Maschinensystemen konnen beliebige Kommunikationssysteme und die hierfür bekannten Sende~/Empfangseinnchtungen - insbesondere funkgestützte Systeme, wie sie auch für Sprechfunk benutzt werden - zum Einsatz kommen. Beispielsweise ist aber auch die Nutzung von Mobilfunknetzen o. Ä. möglich. Besonders bevorzugt handelt es sich um bidirektionale Verbindungen.

Die Erfindung wird im Folgenden unter Hinweis auf die beigefügten Figuren anhand von Ausführungsbeispielen noch einmal näher erläutert. Hieraus ergeben sich auch weitere Einzelheiten und Vorteile der Erfindung. Es zeigen.
Figur 1 eine schematische Darstellung eines erfindungsgemäßen Steuerungssystems zur Steuerung von zwei Maschinensystemen,
Figur 2 ein Territorium, welches von einem Arbeitsverband mit drei Maschinensystemen nach einem Routenplan gemäß einem ersten Ausführungsbeispiel abzuarbeiten ist,
Figur 3 das Territorium gemäß Figur 2, welches von einem Arbeitsverband mit drei Maschinensystemen nach einem Routenplan gemäß einem zweiten Ausführungsbeispiel abzuarbeiten ist,
Figur 4 eine Darstellung möglicher Referenzlinien bei einem Territorium mit polygonen Außenkonturen,
Figur 5 ein in Fahrstrecken unterteiltes, von zwei Arbeitsmaschinen abzuarbeitendes Territorium.

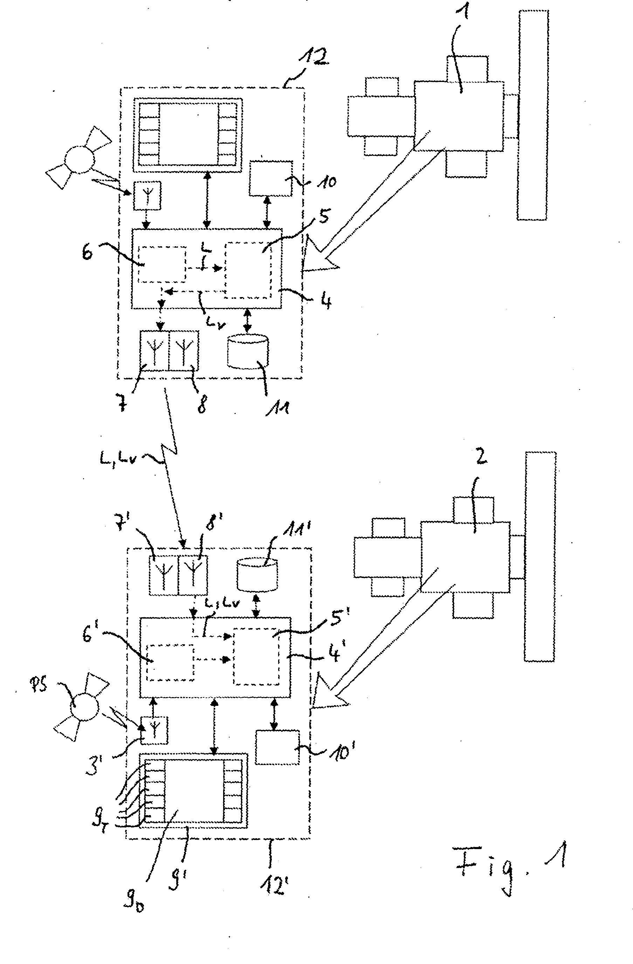

Bei dem in Figur 1 dargestellten Ausführungsbeispiel des erfindungsgemäßen Steuerungssystems werden der Einfachheit halber nur zwei gleichartig aufgebaute Maschinensysteme 1, 2, hier zwei Mahdrescher dargestellt, die z. B. gemeinsam in einem Maschinenverband eingesetzt werden können, um ein größeres Areal in möglichst kurzer Zeit abzuarbeiten.

Der Aufbau und die Funktionsweise solcher Mähdrescher 1, 2 sind dem Fachmann ebenso Wie geeignete Steuerungssysteme zur Steuerung der Mähdrescher 1, 2 grundsätzlich bekannt. Des Weiteren sind beispielsweise aus der EP 0 821 296 A1 und der DE 10 2004 027 242 A2 geeignete Routenplanungssysteme bekannt. Daher sind in Figur 1 nur noch die zur Erläuterung der Erfindung wesentlichen Komponenten der jeweils in den Mähdrescher 1, 2 benötigten Steuerungsanordnungen 12, 12'schematisch dargestellt. Dabei sind diese Steuerungsanordnungen 12, 12', welche zusammen ein erfindungsgemäßes Steuerungssystem bilden, in den beiden Mähdreschern 1, 2 im Wesentlichen identisch aufgebaut.

Die Mähdrescher 1, 2 bzw. die Steuerungsanordnungen 12, 12' weisen hier z B. jeweils eine zentrale Steuerungseinrichtung 4, 4' mit einer Referenzlinienermittlungseinrictitung 6, 6' und einer Routenplanungseinrichtung 5, 5' auf. Bei der zentralen Steuerungseinrichtung 4, 4' kann es sich beispielsweise um einen Mikroprozessor handeln, auf dem die Referenzlinienermittlungseinrichtung 6. 6' und die Routenplanungseinrichtung 5, 5' in Form von Softwaremodulen realisiert sind.

Außerdem weisen die Mähdrescher 1, 2 eine Sendeeinrichtung 7, 7' und eine Empfangseinrichtung 8, 8' auf, um Daten an den jeweils anderen Mähdrescher 2, 1 zu übersenden bzw, von dem anderen Mähdrescher 2, 1 zu empfangen.

In dem in Figur 1 dargestellten Ausführungsbeispiel werden von der Referenzlinienermittlungseinnchtung 6 des ersten Mähdreschers 1 ermittelte Referenzlinien L sowie in Abhängigkeit von diesen Referenzlinien L ermittelte weitere Referenzlinien Lᵥ an die Empfangseinrichtung 8' des zweiten Mähdreschers 2 übertragen.

Jeder der Mähdrescher 1, 2 weist außerdem eine Fahrsteuerungseinheit 10, 10' auf, mit der der jeweilige Mähdrescher 1, 2 entsprechend einer von der Routenplanungseinrichtung 5, 5' geplanten Route automatisch gefahren werden kann.

Fur die Ermittlung der Referenzlinien L und die automatische Steuerung benötigt jeder der Mahdrescher 1, 2 eine Positionsermittlungseinrichtung 3, 3', beispielsweise einen GPS-Empfänger, welcher von geeigneten Positionssatelliten PS GPS-Signale erhält Vorzugsweise handelt es sich hierbei um einen GPS-Empfänger, welcher in einem korrigierten satellitengestutzten System, beispielsweise mit DGPS o. Ä. arbeitet, um eine möglichst exakte Positionsbestimmung, bevorzugt auf wenige Zentimeter genau, durchzufuhren.

Die Referenzlinienermitllungseinrichtung 6, 6' umfasst außerdem entsprechende Aufzeichnungsmittel, um entlang einer abgefahrenen Strecke jeweils die mittels der Positionsermittlungseinrichtung 3, 3' erfassten Positionen aufzuzeichnen und daraus eine Referenzlinie L zu generieren.

Die so ermittelte Referenzlinie L kann dann an die Routenplanungseinrichtung 5, 5' zur weiteren Verarbeitung, d h. zur Planung der optimalen Route, gesendet werden Ebenso kann die Referenzlinie L an die Sendeeinrichtung 7, 7' übergeben werden, um sie dann an die Empfangseinrichtung 8, 8' des jeweils anderen Mähdreschers 2, 3 zu übersenden. Eine an der Empfangseinrichtung 8, 8' empfangene Referenzlinie L kann ebenso an die Routenplanungseinrichtung 5, 5' übergeben werden, um auf Basis dieser Referenzlinie L in der bekannten Weise eine optimale Route zu planen. Ermittelte Referenzlinien, geplante Routen sowie weitere Daten können jeweils in einer Speichereinrichtung 11, 11' für den späteren Gebrauch hinterlegt werden,

In jedem der Mähdrescher 1, 2 befindet sich in einer Fahrerkabine eine Anzeigeeinheit 9 mit einer Displayfläche 9_{D} und einer Anzahl von Tasten 9_{T}, Beispielsweise kann es sich hierbei um ein Display in Form eines Touchscreen handeln, bei dem am Rand entsprechende Funktionstasten 9ᵣ dargestellt sind

Auf der Displayflache 9_{D} können dann die ermittelten Refererizlinien bzw. die von einem anderen Maschinensystem empfangenen Referenzlinien und/oder die optimale abzufahrende Route dargestellt werden. Außerdem können jeweils die Positionen des betreffenden Mähdreschers 1, 2 und die der anderen Maschinensysteme in einer Gesamtdarstellung des abzuarbeitenden Schlags dargestellt werden. So kann der Fahrer jederzeit erkennen, ob sich der von ihm bediente Mähdrescher 1, 2 an der richtigen Position auf der abzufahrenden Route befindet und wo sich die anderen Maschinensysteme befinden. Durch die Tasten 9ᵣ kann der Fahrer die Darstellungsart wählen bzw. von automatischem Fahrbetrieb auch in einen Handbetrieb umschalten.

In einem solchen Handbetrieb werden dem Fahrer beispielsweise auf der Displayflache 9_{D} eine virtuelle Leitlinie und ein Symbol für die Position des von ihm bedienten Maschinensystems 1, 2 angezeigt, so dass die Abweichung des Symbols von der virtuellen Leitlinie, die der Abweichung des Maschinensystems von der zu fahrenden Route entspricht, angezeigt wird. Mit einer solchen Führungshilfe kann der Fahrer das Fahrzeug manuell relativ exakt entlang der gewünschten Route steuern,

Es ist klar, dass ein Automatikmodus, in dem der Mähdrescher 1, 2 vollautomatisch von der Fahrsteuerungseinheit 10, 10' entlang der geplanten Route verfahren wird, jederzeit durch einen Notknopf ausgeschaltet werden kann. Eine solche Abschaltung wird auch erreicht, wenn der Fahrer beispielsweise ins Lenkrad greift oder die Bremse bedient. Das heißt, ein solcher Automatikmodus ist jederzeit vom Fahrer übersteuerbar.

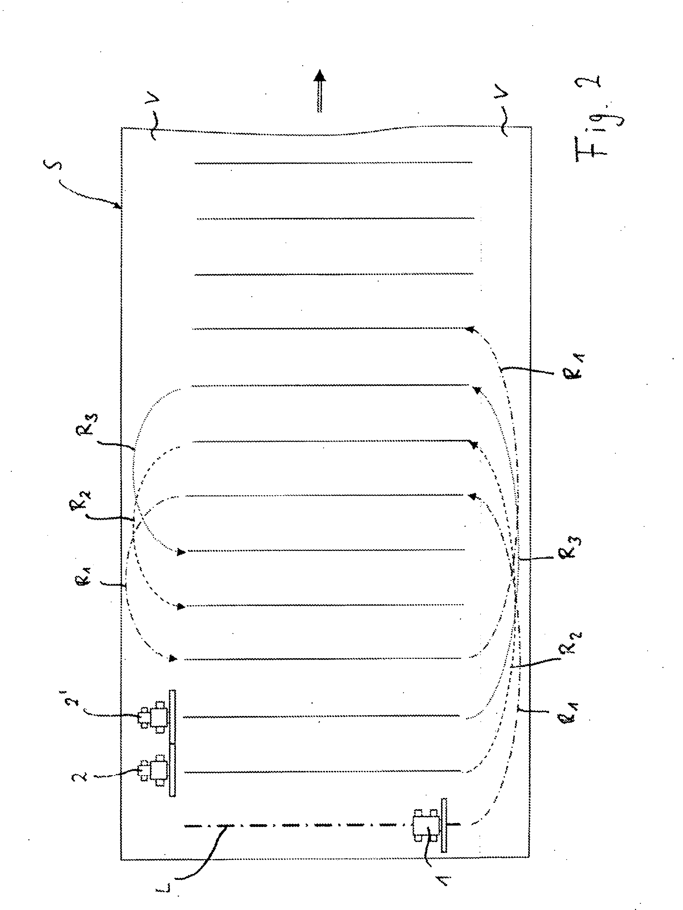

In Figur 2 ist ein möglicher Einsatz eines erfindungsgemäßen Steuerungssystems auf einem relativ großen rechtwinkligen Schlag dargestellt, der mit drei in einem Arbeitsverband parallel arbeitenden Mähdreschern 1, 2, 2' abgearbeitet wird, Die Mähdrescher bzw. deren für das erfindungsgemäße Steuerungssystem notwendige Komponenten können wie in Figur 1 dargestellt aufgebaut sein.

Da es sich um ein rechtwinkliges Feld S handelt, reicht es aus, wenn der erste Mähdrescher 1 zunächst eine erste Kante, hier die linke Kante des Felds, abfährt und dabei die Leitlinie L generiert wird. Dieser Mahdrescher 1 übersendet dann die Leitlinie L - d. h. die hierfür benötigten Daten - an die anderen Mahdrescher 2, 2' des Arbeitsverbandes. Zusätzlich werden weitere Informationen übergeben, beispielsweise hier, dass die Arbeitsbreite aller im Arbeitsverband tätigen Mähdrescher 1, 2, 2' gleich ist und dass nach einer gemeinsamen Arbeitsstrategie jeder Mähdrescher 1, 2, 2' nur jede dritte Spur abzuernten hat Daraufhin können von den einzelnen Mähdreschern 1, 2, 2' jeweils die optimalen Routen R₁, R₂, R₃ berechnet werden, und die Mähdrescher 1, 2, 2' können jeweils gemäß diesen angezeigten Routen R₁, R₂, R₃ das Feld abarbeiten. Auf diese Weise können sehr schnell große Feldflachen abgearbeitet werden, wobei es aufgfund der geschickten Anwahl der Spuren nicht notwendig ist, dass die einzelnen Mähdrescher 1, 2, 2' lange Wendemanover mit Umstellen der Fahrtrichtung durchführen, sondern direkt die nächste von ihnen abzuerntende Spur anfahren können.

Sinnvollerweise stehen bei einer solchen Vorgehensweise die einzelnen Mähdrescher 1, 2, 2' bzw deren Routenplanungssysteme in permanentem Datenaustausch untereinander und übersenden insbesondere an die jeweils anderen Mähdrescher 1, 2, 2' die eigene Position, so dass bei der Routenplanung berücksichtigt werden kann, dass es nicht zu Kollisionen oder Wartezeiten zur Vermeidung von Kollisionen, insbesondere in den Vorgewendebereichen V kommen kann.

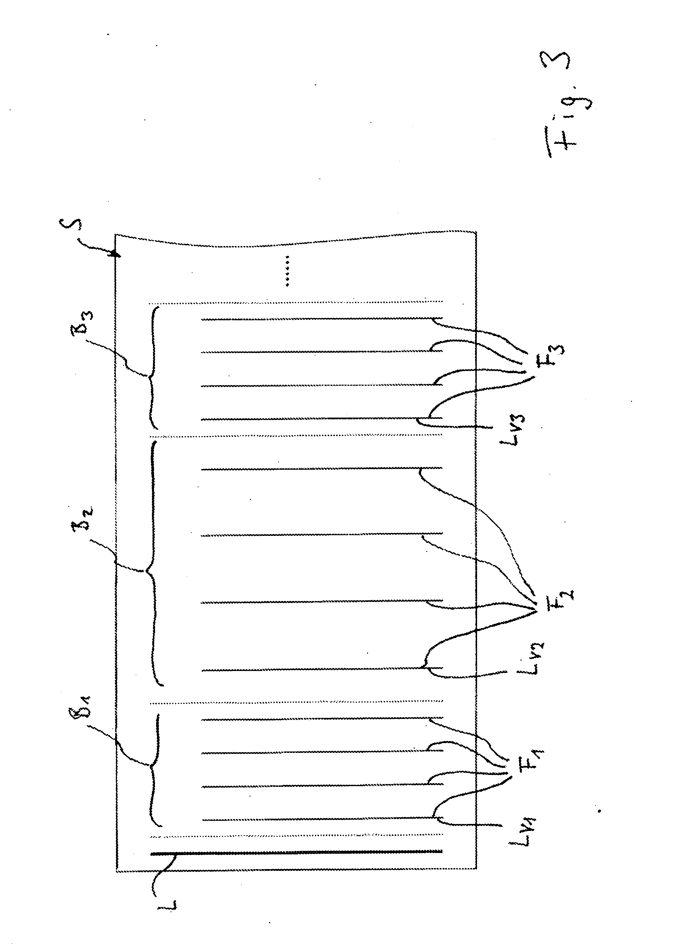

Figur 3 zeigt noch einmal das gleiche Feld S. hier jedoch bei der gemeinsamen Bearbeitung durch drei Maschinensysteme mit einer anderen Arbeitsstrategie, Auch hier wird zunächst durch Abfahren der außersten rechten Feldkante die erste Referenzlinie L durch das erste Maschinensystem erfasst. Hier sollen jedoch drei Maschinensysteme mit unterschiedlichen Arbeitsbreiten eingesetzt werden. Daher wird der Schlag S in geschickter Weise in verschiedene Beete B₁, B₂, B₃ unterteilt, wobei bei der Aufteilung berucksichtigt wird, welches Beet B₁, B₂, B₃ von welchem Maschinensystem mit welcher Arbeitsbreite abzuarbeiten ist. Die Beetgrößen werden dabei so gewählt, dass die Maschinensysteme jeweils vier Fahrspuren F₁, F₂, F₃ zur Abarbeitung des jeweiligen Beets B₁, B₂, B₃ benötigt. Durch die unterschiedliche Spurbreite ergeben sich dementsprechend unterschiedliche Beetbreiten. Von der ursprünglich ermittelten Referenzlinie L werden dann für die einzelnen Beete B₁, B₂, B₃ jeweils virtuelle Referenzlinien L_{V1}, L_{V2}, L_{V3} abgeleitet. Die einzelnen Maschinensysteme konnen dann auf Basis der abgeleiteten Referenzlinien L_{V1}, L_{V2}, L_{V3} selber die weiteren Fahrspuren F₁, F₂, F₃ innerhalb des von ihnen abzuarbeitenden Beets B₁, B₂, B₃ bestimmen und sich eine optimale Route wählen.

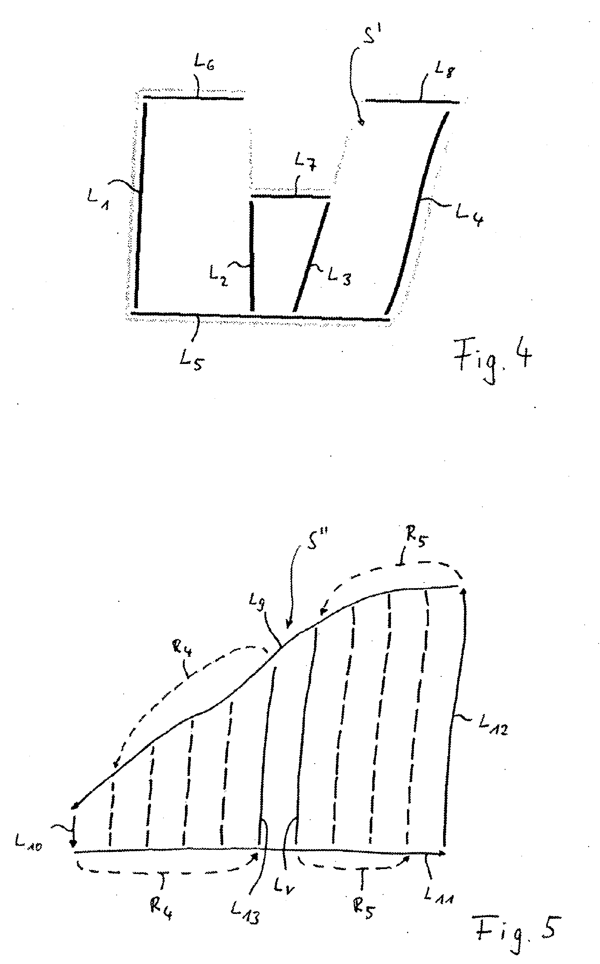

Figur 4 zeigt, wie durch eine geschickte Aufnahme bestimmter Referenzlinien gesonderte Flachenbereiche in einem Schlag S' mit polygonen Außenkanten bestimmt werden konnen. So konnen beispielsweise zunächst die Referenzlinien L₁, L₅, L₄, L₆, L₇, L₈ abgefahren werden, die die Außenkanten des Schlages S' definieren. Weitere Referenzlinien L₂, L₃, können dazu dienen, den Schlag S' in drei Teilgebiete zu unterteilen. Diese Referenzlinien L₁, L₅, L₄, L₆, L₂, L₈ können beispielsweise von einem ersten Maschinensystem, beispielsweise in einem Schlepper mit entsprechenden Maschinenanbauten bei der Einsaat, ermittelt werden und dann an weitere Maschinensysteme ubermittelt werden, die später in der Prozesskette benötigt werden Anhand dieser Referenzlinien können dann die nachfolgenden Maschinensysteme ihre eigenen optimalen Routen planen.

Es ist aber auch moglich, dass beispielsweise bei einer parallelen Bearbeitung dieses Schlages wieder anhand der Referenzlinien einzelne Beete gebildet werden, die verschiedenen Maschinensystemen eines Maschinenverbandes zugeordnet werden, welche dann jeweils anhand der für dieses Teilbeet geltenden Referenzlinien eine optimale Route ermitteln, mit der das betreffende Maschinensystem das zugeordnete Beet bearbeitet.

Ein weiteres Beispiel hierfür ist in Figur 5 dargestellt. Hier wird ein Schlag S" von zwei Maschinensystemen zumindest teilweise parallel bearbeitet. Dazu fährt zunächst ein Maschinensystem, beispielsweise ein erster Mähdrescher, entlang der oberen Schlagkante und schneidet dabei den Vorgewendebereich am oberen Feldrand frei. Dabei wird gleichzeitig die obere Kontur des Schlages S" als erste Referenzlinie L₉ aufgezeichnet. Gleichzeitig fährt das zweite Maschinensystem, beispielsweise ein zweiter Mähdrescher, entlang der in Figur 5 unteren Kante des Schlages S" und schneidet dort den Vorgewendebereich frei, wobei gleichzeitig die untere Referenzlinie L₁₁ erfasst wird. Jeder der Mähdrescher übersendet dann die von ihm ermittelte Referenzlinie L₉, L₁₁ an den jeweils anderen Mähdrescher. Der zweite Mähdrescher fährt dann am rechten Rand des Schlags S" die erste Spur von unten nach oben ab und zeichnet dort eine weitere Referenzlinie L₁₂ auf Parallel dazu fährt der erste Mähdrescher die kürzere Spur am linken Rand des Schlags S" ab, zeichnet dort ebenfalls eine weitere Referenzlinie L₁₀ auf und folgt dann einer von ihm generierten Route R₄ bis ungefähr zum mittleren Bereich des Feldes, entlang dessen der Schlag S" in zwei Beete B₄. B₅ unterteilt werden soll.

Er schneidet dann eine mittlere Spur frei und erfasst dabei zugleich eine weitere Referenzlinie L₁₃. Diese Referenzlinie L₁₃ wird dann um eine Schnittbreite nach rechts verschoben, so dass sich eine abgeleitete Referenzlinie Lᵥ ergibt, welche als virtuelle Leitlinie L_{V} für die Bearbeitung an der Grenze der beiden Beete B₄, B₅ für den zweiten Mähdrescher geeignet ist. Diese Referenzlinie Lᵥ wird an den zweiten Mähdrescher übersendet, der dann entsprechend seine Routenplanung vornimmt und direkt von der rechten Randkante entlang der Route R₅ eine Spur anfährt, welche der übersendeten Referenzlinie Lᵥ entspricht, um nach Abarbeiten dieser Spur dann weiter entlang der von ihm geplanten optimalen Route R₅ zu verfahren.

Es ist klar, dass es sich bei den in den Figuren 2, 3 und 5 dargestellten Ausführungsbeispielen wieder nur um relativ kleine Feldausschnitte handelt, die lediglich prinzipielle Möglichkeiten zur Feldbearbeitung wiedergeben. In der Realität wird es sich um erheblich größere Territorien mit einer Vielzahl von Spuren handeln, wenn zur Bearbeitung ein Verband mit mehreren parallel arbeitenden Maschinensystemen eingesetzt werden soll. Anhand der Beispiele lässt sich aber schnell erfassen, welche Vorteile - nämlich das Generieren einer zentralen Referenzlinie durch ein Maschinensystem und die Bereitstellung dieser Referenzlinie für weitere Anwendungen anderer Maschinensysteme - das erfindungsgemäße Verfahren bietet.

Es wird abschließend noch einmal darauf hingewiesen, dass es sich bei den in den Figuren dargestellten Maschinensystemen und Steuerungssystemen sowie den im Zusammenhang damit erlauterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

### Bezugszeichenliste

- 1: Mähdrescher
- 2.2': Mähdrescher
- 3,3': Positionsermittlungseinrichtung
- 4, 4': Steuerungseinrichtung
- 5, 5': Routenplanungseinrichtung
- 6, 6': Referenzlinienermittlungseinrichtung
- 7, 7': Sendeeinrichtung
- 8, 8': Empfangseinrichtung
- 9.9': Anzeigeeinheit
- 9_{D}: Displayfläche
- 9_{T}: Taste
- 10, 10': Fahrsteuerungseinheit
- 11, 11': Speichereinrichtung
- 12, 12': Steuerungsanordnung

- S: Schlag
- S': Schlag
- S": Schlag
- V: Vorgewendebereich
- L: Referenzlinie
- Lᵥ: Referenzlinie
- L₁, L₂, ..., L₁₃: Referenzlinien
- Lᵥ₁, Lᵥ₂, Lᵥ₃: Referenzlinien
- R₁, R₂, ..., R₅: Routen
- B₁, B₂, ..., B₅: Beete

## Patentansprüche

1. Verfahren zur Steuerung mehrerer landwirtschaftlicher Maschinensysteme (1, 2, 2') bei der Bearbeitung eines zu bearbeitenden Territoriums (S, S'. S") bei dem auf Basis einer Referenzlinie (L. L₁, L₂,... L₁₃) eine optimierte Route (R₁, R₂, E₃, R₄, R₅) zur Bearbeitung des Territoriums (S, S', S") für das jeweilige Maschinensystem (1, 2) ermittelt wird und das betreffende Maschinensystem (1, 2) entlang dieser Route gefahren wird, wobei
die Referenzlinie (L, L₁, L₂...., L₁₃) durch Aufzeichnen einer mit einem ersten Maschinensystem (1) abgefahrenen Referenzstrecke ermittelt wird **dadurch gekennzeichnet, dass**
diese Referenzlinie (L, L₁, L₂...., L₁₃) vom ersten Maschinensystem (1) an zumindest ein zweites Maschinensystem (2, 2') übersendet wird, welches auf Basis dieser Referenzlinie (L, L₁ L₂,..., L₁₃) des ersten Maschinensystems (1) und unter Berücksichtigung der Arbeitsbedingungen des zweiten Maschinensystems (2, 2') gesteuert wird.

2. Verfahren nach Anspruch 1, **dadurch gekennzeichnet, dass** das erste Maschinensystem (1) auf Basis der vom ersten Maschinensystem (1) aufgezeichneten Referenzlinie (L. L₁, L₂,..., L₁₃) unter Berücksichtigung der Arbeitsbedingungen des ersten Maschinensystems (1) gesteuert wird.

3. Verfahren nach Anspruch 1 oder 2, **dadurch gekenntzeichnet, dass** zur Ermittlung der Referenzlinie (L, L₁, L₂,..., L₁₃₎ und zur Ermittelung der optimierten Routen (R₁, R₂, R₃, E₄, R₅) für das erste Maschinensystem (1) und das zweite Maschinensystem (2, 2') jeweils dasselbe Koordinatensystem verwendet wird.

4. Verfahren nach einem der Ansprüche 1 bis 3, **dadurch gekennzeichnet, dass** das erste Maschinensystem (1) und das zweite Maschinensystem (2, 2') das Territorium (S') zeitlich nacheinander bearbeiten.

5. Verfahren nach einem der Ansprüche 1 bis 3, **dadurch gekennzeichnet, dass** das erste Maschinensystem (1) und das zweite Maschinensystem (2, 2') ein Territorium (S, S") zumindest zeitweise parallel bearbeiten.

6. Verfahren nach einem der Ansprüche 1 bis 5, **dadurch gekennzeichnet, dass** vom ersten Maschinensystem mehrere Referenzlinien (L. L₁, L₂,..., L₁₃) ermittelt und an das zweite Maschinensystem (2, 2') übersendet werden,

7. Verfahren nach einem der Ansprüche 1 bis 6, **dadurch gekennzeichnet, dass** auf Basis einer ursprünglich ermittelten Referenzlinie (L, E₁₃) eine weitere Referenzlinie (L_{V1}, L_{V2}, L_{V3,} L_{V}) ermittelt wird, welche anstelle oder zusammen mit der zunächst ermittelten Referenzlinie (L, L₁₃) an das zweite Maschinensystem (2) übergeben wird.

8. Verfahren nach einem der Ansprüche 1 bis 7. **dadurch gekennzeichnet, dass** zusätzlich zu der Referenzlinie (L, L₁, L₂...., L₁₃) Zusatzinformationen vom ersten Maschinensystem (1) an das zweite Maschinensystem (2, 2") übergeben werden.

9. Verfahren nach einem der Ansprüche 5 bis 8, **dadurch gekennzeichnet, dass**, sofern mit dem ersten Maschinensystem (1) eine neue Referenzlinie (L, L₁, L₂,...,L₁₃) ermittelt wird, diese sofort an das zweite Maschinensystem (2, 2') übermittelt wird.

10. Steuerungssystem (12, 12') zur Steuerung einer Mehrzahl von landwirtschaftlichen Maschinensystemen (1, 2, 2') bei der Bearbeitung eines zu bearbeitenden Territoriums (S, S', S"), mit einer an einem ersten Maschinensystem (1) angeordneten Referenzlinienermittlungseinrichtung (6), um durch Aufzeichnen einer mit dem ersten Maschinensystem (1) abgefahrenen Referenzstrecke eine Referenzlinie (L, L1, L2, ..., L13) zu ermitteln,
**dadurch gekennzeichnet,**
**dass** am ersten Maschinensystem (1) eine Sendeeinrichtung (7) angeordneten ist, um die Referenzlinie (L, L1, L2, ...,L13) an zumindest ein zweites Maschinensystem (2, 2') zu übersenden, mit einer an zumindest einem zweiten Maschinensystem (2, 2') angeordneten Empfangseinrichtung (8'), um die Referenzlinie (L, L1, L2,..., L13) des ersten Maschinensystems (1) zu empfangen, mit einer Routenplanungseinrichtung (5') für das zweite Maschinensystem (2, 2'), um auf Basis der empfangenen Referenzlinie (L, L1, L2, ..., L13) und unter Berücksichtigung der Arbeitsbedingungen des zweiten Maschinensystems (2, 2') eine optimierte Route (R2, R3, R5) zur Bearbeitung des Territoriums (S, S', S") für das zweite Maschinensystem (2, 2') zu ermitteln.

11. Steuerungssystem nach Anspruch 10, **dadurch gekennzeichnet, dass** das zweite Maschinensystem (2, 2') eine Referenzlinienermittlungseinrichtung (6'), um durch Aufzeichnen einer mit dem zweiten Maschinensystem (2') abgefahrenen Referenzstrecke eine Referenzlinie zu ermitteln, und eine Sendeeinrichtung (7') aufweist, um die Referenzline an zumindest ein weiteres Maschinensystem zu übersenden,
und dass das erste Maschinensystem (1) eine Empfangseinrichtung (8) aufweist, um eine Referenzlinie eines anderen Maschinensystems zu empfangen.

## Claims

1. A method of controlling a plurality of agricultural machine systems (1, 2, 2') in working a territory (S, S', S") to be worked, in which an optimised route (R₁, R₂, R₃, R₄, R₅) for working the territory (S, S', S") is ascertained for the respective machine system (1, 2) on the basis of a reference line (L, L₁, L₂..., L₁₃₎ and the machine system (1, 2) in question is driven along that route, wherein the reference line (L, L_{1,} L₂..., L₁₃) is ascertained by recording a reference path travelled with a first machine system (1),
**characterised in that** said reference line (L, L₁, L₂..., L₁₃) is transmitted from the first machine system (1) to at least one second machine system (2, 2') which is controlled on the basis of said reference line (L, L₁, L₂..., L₁₃) of the first machine system (1) and having regard to the working conditions of the second machine system (2, 2').

2. A method according to claim 1 **characterised in that** the first machine system (1) is controlled on the basis of the reference line (L, L₁, L₂..., L₁₃) recorded by the first machine system (1) and having regard to the working conditions of the first machine system (1).

3. A method according to claim 1 or claim 2 **characterised in that** the same respective co-ordinate system is used for ascertaining the reference line (L, L₁, L₂..., L₁₃) and for ascertaining the optimised routes (R₁, R₂, R₃, R₄, R₅) for the first machine system (1) and the second machine system (2, 2').

4. A method according to one of claims 1 to 3 **characterised in that** the first machine system (1) and the second machine system (2, 2') work the territory (S') in temporal succession.

5. A method according to one of claims 1 to 3 **characterised in that** the first machine system (1) and the second machine system (2, 2') work the territory (S, S") in parallel at least at times.

6. A method according to one of claims 1 to 5 **characterised in that** a plurality of reference lines (L, L₁, L₂..., L₁₃) are ascertained by the first machine system and transmitted to the second machine system (2, 2').

7. A method according to one of claims 1 to 6 **characterised in that** a further reference line (L_{V1}, L_{V2}, L_{V3}, L_{V}) is ascertained on the basis of an originally ascertained reference line (L, L₁₃), which further reference line is then transmitted to the second machine system (2) instead of or together with the firstly ascertained reference line (L, L₁₃).

8. A method according to one of claims 1 to 7 **characterised in that** in addition to the reference line (L, L₁, L₂..., L₁₃) additional items of information are transmitted from the first machine system (1) to the second machine system (2, 2").

9. A method according to one of claims 5 to 8 **characterised in that** if a new reference line (L, L₁, L₂..., L₁₃) is ascertained with the first machine system (1), it is immediately transmitted to the second machine system (2, 2').

10. A control system (12, 12') for controlling a plurality of agricultural machines systems (1, 2, 2') in working a territory (S, S', S") to be worked, comprising a reference line ascertaining device (6) arranged on a first machine system (1) for ascertaining a reference line (L, L₁, L₂..., L₁₃) by recording a reference path travelled with the first machine system (1),
**characterised in that** arranged on the first machine system (1) is a transmitting device (7) for transmitting the reference line (L, L₁, L₂..., L₁₃) to at least one second machine system (2, 2'), a receiving device (8') arranged on at least one second machine system (2, 2') for receiving the reference line (L, L₁, L₂..., L₁₃) of the first machine system (1), and a route planning device (5') for the second machine system (2, 2') for ascertaining an optimised route (R₂, R₃, R₅) for working the territory (S, S', S") for the second machine system (2, 2') on the basis of the received reference line (L, L₁, L₂..., L₁₃) and having regard to the working conditions of the second machine system (2, 2').

11. A control system according to claim 10 **characterised in that** the second machine system (2, 2') has a reference line ascertaining device (6') for ascertaining a reference line by recording a reference path travelled with the second machine system (2') and a transmitting device (7) for transmitting the reference line to at least one further machine system, and the first machine system (1) has a receiving device (8) for receiving a reference line of another machine system.

## Revendications

1. Procédé de commande de plusieurs systèmes de machines agricoles (1, 2, 2') lors du travail d'un territoire à travailler (S, S', S"), dans lequel, sur la base d'une ligne de référence (L, L₁, L₂, ..., L₁₃), un itinéraire optimisé (R₁, R₂, R₃, R₄, R₅) pour le travail du territoire (S, S', S") est déterminé pour le système de machine (1, 2) respectif, et le système de machine concerné (1, 2) est déplacé le long de cet itinéraire, la ligne de référence (L, L₁, L₂, ..., L₁₃) étant déterminée par enregistrement d'un trajet de référence parcouru avec un premier système de machine (1), **caractérisé en ce que** cette ligne de référence (L, L₁, L₂, ... , L₁₃) est transmise par le premier système de machine (1) à au moins un deuxième système de machine (2, 2'), lequel est commandé sur la base de cette ligne de référence (L, L₁, L₂, ..., L₁₃) du premier système de machine (1) et en tenant compte des conditions de travail du deuxième système de machine (2, 2').

2. Procédé selon la revendication 1, **caractérisé en ce que** le premier système de machine (1) est commandé sur la base de la ligne de référence (L, L₁, L₂, ..., L₁₃) enregistrée par le premier système de machine (1) et en tenant compte des conditions de travail du premier système de machine (1).

3. Procédé selon la revendication 1 ou 2, **caractérisé en ce que** le même système de coordonnées est utilisé pour déterminer la ligne de référence (L, L₁, L₂, ... , L₁₃) et pour déterminer les itinéraires optimisés (R₁, R₂, R₃, R₄, R₅) pour le premier système de machine (1) et le deuxième système de machine (2, 2').

4. Procédé selon une des revendications 1 à 3, **caractérisé en ce que** le premier système de machine (1) et le deuxième système de machine (2, 2') travaillent le territoire (S') l'un après l'autre dans le temps.

5. Procédé selon une des revendications 1 à 3, **caractérisé en ce que** le premier système de machine (1) et le deuxième système de machine (2, 2') travaillent un territoire (S, S") en parallèle au moins par moments.

6. Procédé selon une des revendications 1 à 5, **caractérisé en ce que** le premier système de machine détermine et envoie au deuxième système de machine (2, 2') plusieurs lignes de référence (L, L₁, L₂,..., L₁₃).

7. Procédé selon une des revendications 1 à 6, **caractérisé en ce que** l'on détermine, sur la base d'une ligne de référence déterminée initialement (L, L₁₃), une autre ligne de référence (L_{V1}, L_{V2}, M_{V3}, L_{V}), laquelle est transmise au deuxième système de machine (2) à la place de ou conjointement avec la ligne de référence déterminée initialement (L, L₁₃).

8. Procédé selon une des revendications 1 à 7, **caractérisé en ce qu'**en plus de la ligne de référence (L, L₁, L₂, ... , L₁₃), des informations supplémentaires sont transmises du premier système de machine (1) au deuxième système de machine (2, 2').

9. Procédé selon une des revendications 5 à 8, **caractérisé en ce que**, si une nouvelle ligne de référence (L, L₁, L₂, ..., L₁₃) est déterminée par le premier système de machine (1), celle-ci est immédiatement transmise au deuxième système de machine (2, 2').

10. Système de commande (12, 12') pour commander une pluralité de systèmes de machines agricoles (1, 2, 2') lors du travail d'un territoire à travailler (S, S', S"), avec un dispositif de détermination de ligne de référence (6) disposé sur un premier système de machine (1) pour déterminer une ligne de référence (L, L₁, L₂, ... , L₁₃) par enregistrement d'un trajet de référence parcouru avec le premier système de machine (1), **caractérisé en ce qu'**un dispositif d'émission (7) est disposé sur le premier système de machine (1) pour envoyer la ligne de référence (L, L₁, L₂, ..., L₁₃) à au moins un deuxième système de machine (2, 2'), avec un dispositif de réception (8') disposé sur au moins un deuxième système de machine (2, 2') pour recevoir la ligne de référence (L, L₁, L₂, ... , L₁₃) du premier système de machine (1), avec un dispositif de planification d'itinéraire (5') pour le deuxième système de machine (2, 2') pour, sur la base de la ligne de référence (L, L₁, L₂, ..., L₁₃) reçue et en tenant compte des conditions de travail du deuxième système de machine (2, 2'), déterminer pour le deuxième système de machine (2, 2') un itinéraire optimisé (R₂, R₃, R₅) pour travailler le territoire (S, S', S").

11. Système de commande selon la revendication 10, **caractérisé en ce que** le deuxième système de machine (2, 2') comporte un dispositif de détermination de ligne de référence (6'), pour déterminer une ligne de référence par enregistrement d'un trajet de référence parcouru avec le deuxième système de machine (2'), et un dispositif d'émission (7') pour transmettre la ligne de référence à au moins un autre système de machine, et que le premier système de machine (1) comporte un dispositif de réception (8) pour recevoir une ligne de référence d'un autre système de machine.
